# EUROPÄISCHE PATENTSCHRIFT

(11) **EP 0 535 490 B1**
(45) Veröffentlichungstag und Bekanntmachung des Hinweises auf die Patenterteilung: **04.06.1997**
(21) Anmeldenummer: 92116096.6
(22) Anmeldetag: 21.09.1992
(51) Int. Cl.: C09B 69/10, C08F 20/34, G02F 1/35

(54) **Azofarbstoffe enthaltende Polymerisate**
Polymers containing azo dyestuffs
Polymères contenant des colorants azoiques

(30) Priorität: 01.10.1991 DE 4132685
(43) Veröffentlichungstag der Anmeldung: 07.04.1993
(73) Patentinhaber: BASF Aktiengesellschaft, 67063 Ludwigshafen (DE)
(72) Erfinder: Wiesenfeldt, Matthias, Dr., W-6704 Mutterstadt (DE); Gruettner-Merten, Sabine, Dr., W-6704 Mutterstadt (DE); Sens, Ruediger, Dr., W-6800 Mannheim 1 (DE); Etzbach, Karl-Heinz, Dr., W-6710 Frankenthal (DE); Kilburg, Heike, Dr., W-6720 Speyer (DE)

(56) Entgegenhaltungen:
- WO-A-91/09842
- FR-A- 1 468 540
- FR-A- 2 378 807
- US-A- 3 507 850
- JOURNAL OF POLYMER SCIENCE, POLYMER CHEMISTRY EDITION Bd. 28, Nr. 1 , 15. Januar 1990 , NEW YORK US Seiten 1 - 13 D. R. ROBELLO 'Linear Polymers for Nonlinear Optics. I. Polyacrylats Bearing Aminonitro-Stilbene and -Azobenzene Dyes'

## Beschreibung

Die vorliegende Erfindung betrifft neue Azofarbstoffe enthaltende Polymerisate, die als charakteristische Monomereinheiten Reste der Formeln I, II, III und IV 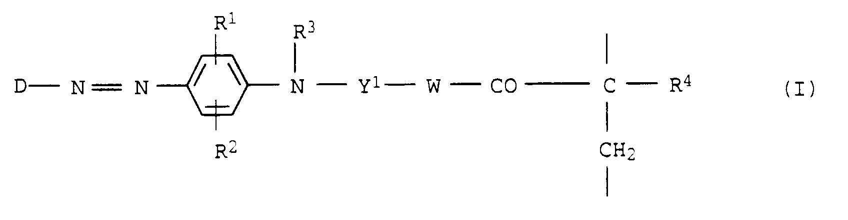 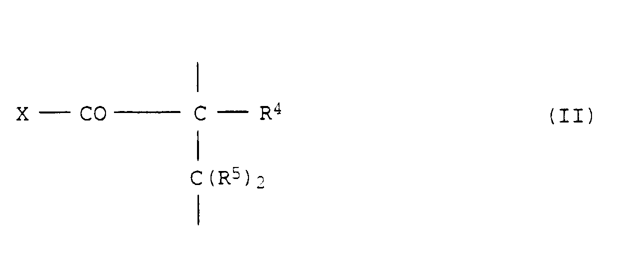 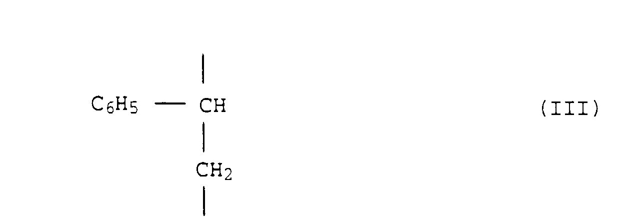 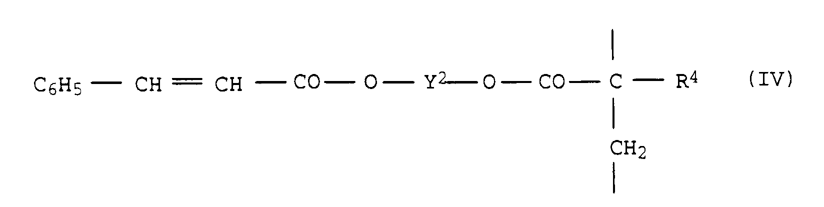 aufweisen, worin
- D: sich von einem heterocyclischen Amin aus der Pyrrol-, Furan-, Thiophen-, Pyrazol-, Imidazol-, Oxazol-, Isoxazol-, Isothiazol-, Triazol-, Oxdiazol-, Thiadiazol-, Benzofuran-, Benzthiophen-, Benzimidazol-, Benzoxazol-, Benzisothiazol-, Pyridothiophen-, Pyrimidothiophen- oder Thienothiophenreihe ableitet,
- R¹ und R²: unabhängig voneinander jeweils Wasserstoff, C₁-C₆-Alkyl oder C₁-C₆-Alkoxy, das gegebenenfalls durch Phenyl oder C₁-C₄-Alkoxy substituiert ist, oder R² auch C₁-C₄-Alkanoylamino,
- R³: Wasserstoff, C₁-C₆-Alkyl, C₅-C₇-Cycloalkyl oder C₃-C₄-Alkenyl,
- _{R}4: Wasserstoff, Deuterium, Methyl, trideuteriertes Methyl oder Chlor,
- R⁵: Wasserstoff oder Deuterium,
- Y¹ und Y²: unabhängig voneinander jeweils C₂-C₁₀-Alkylen, das gegebenenfalls durch 1 bis 3 Sauerstoffatome in Etherfunktion oder Imino- oder C₁-C₄-Alkyliminogruppen unterbrochen ist,
- W: Sauerstoff, Imino oder C₁-C₄-Alkylimino und
- X: Hydroxy, C₁-C₆-Alkoxy, trideuteriertes Methoxy, 2,3-Epoxypropoxy, Phenoxy, Amino oder C₁-C₄-Mono- oder Dialkylamino bedeuten,
wobei der Anteil der Monomereinheiten der Formel I 1 bis 100 mol-%, der der Formel II 0 bis 99 mol-%, der der Formel III 0 bis 99 mol-% und der der Formel IV 0 bis 75 mol-%, jeweils bezogen auf das Polymerisat und das mittlere Molekulargewicht des Polymerisats 1000 bis 100000 betragen, deren Verwendung in der nichtlinearen Optik sowie die Verwendung von monomeren Azofarbstoffen zur Herstellung der neuen Polymerisate.

Die WO-A 91/09842 beschreibt Benzthiazol- bzw. Thienothiazolazofarbstoffchromophore enthaltende Polymere, die nichtlineare optische Eigenschaften besitzen.

In der US-A 3 507 850 werden Azofarbstoffe und Polymerisate aus diesen Azofarbstoffen beschrieben, welche als Diazokomponente einen Thiazolheterozyklus enthalten.

Aus J. Polymer Sci., Part A, Polymer Chem., Band 28, Seiten 1 bis 13, 1990 sind Polymerisate bekannt, die in den Seitenketten Azofarbstoffe als Chromophore enthalten. Die Azofarbstoffe stammen dabei aus der Azobenzolreihe. Es hat sich jedoch gezeigt, daß solche Polymerisate bei ihrer Anwendung in nichtlinear optischen Systemen noch Mängel aufweisen.

Aufgabe der vorliegenden Erfindung war es daher, neue Polymerisate bereitzustellen, die ebenfalls über donor-akzeptorsubstituierte Azofarbstoffe als Chromophor in der Seitenkette verfügen und die vorteilhaft zur Anwendung in nichtlinear optischen Systemen geeignet sein sollten.

Demgemäß wurden die oben näher bezeichneten Azofarbstoffe enthaltende Polymerisate gefunden.

Besonders zu nennen sind als Reste D in Formel I, die von einem heterocyclischen Amin aus der Pyrrol-, Thiophen-, Pyrazol-, Isothiazol-, Triazol-, Thiadiazol-, Benzthiophen-, Benzisothiazol-, Pyridothiophen-, Pyrimidothiophen- oder Tienothiophenreihe stammen.

Hervorzuheben sind Reste D, die von Aminoheterocyclen der Formeln 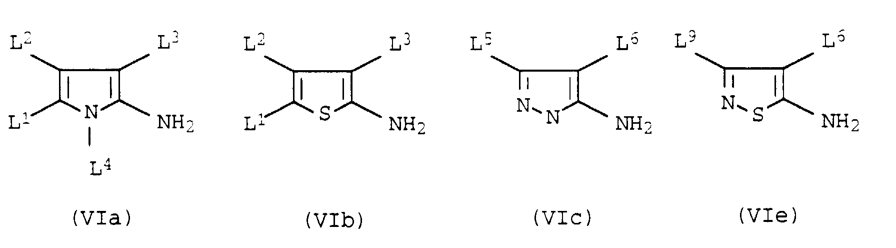 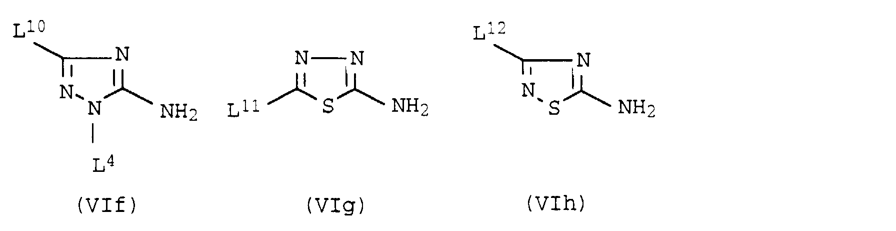 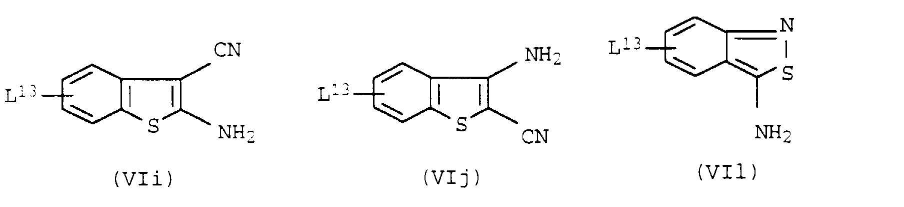 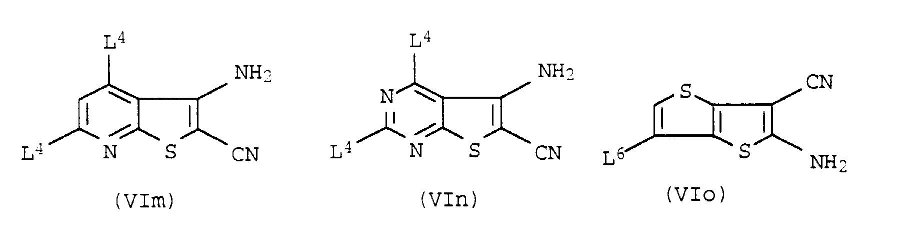 stammen, worin
- L¹: Nitro, Cyano, C₁-C₆-Alkanoyl, Benzoyl, C₁-C₆-Alkylsulfonyl, gegebenenfalls substituiertes Phenylsulfonyl oder einen Rest der Formel -CH=T, worin T für den Rest einer CH-aciden Verbindung steht,
- L²: Wasserstoff, C₁-C₆-Alkyl, Halogen, Hydroxy, Mercapto, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₆-Alkylthio, gegebenenfalls substituiertes Phenylthio, C₁-C₆-Alkylsulfonyl oder gegebenenfalls substituiertes Phenylsulfonyl,
- L³: Cyano, C₁-C₄-Alkoxycarbonyl oder Nitro,
- L⁴: Wasserstoff, C₁-C₆-Alkyl oder Phenyl,
- L⁵: C₁-C₆-Alkyl oder Phenyl,
- L⁶: Cyano, C₁-C₄-Alkoxycarbonyl, C₁-C₆-Alkanoyl oder Halogen,
- L⁹: Cyano, gegebenenfalls durch Phenyl substituiertes C₁-C₆-Alkyl, gegebenenfalls durch Phenyl substituiertes C₁-C₆-Alkylthio, gegebenenfalls substituiertes Phenyl, Thienyl, C₁-C₄-Alkylthienyl, Pyridyl oder C₁-C₄-Alkylpyridyl,
- L¹⁰: Phenyl oder Pyridyl,
- L¹¹: Trifluormethyl, Nitro, C₁-C₆-Alkyl, Phenyl, gegebenenfalls durch Phenyl substituiertes C₁-C₆-Alkylthio oder C₁-C₄-Dialkylamino,
- L¹²: C₁-C₆-Alkyl, Phenyl, 2-Cyanoethylthio oder 2-(C₁-C₄-Alkoxycarbonyl)ethylthio,
- L¹³: Wasserstoff, Nitro oder Halogen bedeuten.

Wenn in den erfindungsgemäßen Azofarbstoffe enthaltenden Polymerisaten substituiertes Phenyl auftritt, so können beispielsweise C₁-C₄-Alkyl, C₁-C₄-Alkoxy oder Halogen, dabei insbesondere Chlor oder Brom, als Substituenten in Betracht kommen. Die Phenylringe weisen dabei in der Regel 1 bis 3 Substituenten auf.

Alle in den obengenannten Formeln auftretenden Alkyl-, Alkylen-oder Alkenylgruppen können sowohl geradkettig als auch verzweigt sein.

Reste R¹, R², R³, L², L⁴, L⁵, L⁹, L¹¹ und L¹² sind z.B. Methyl, Ethyl, Propyl, Isopropyl, Butyl, Isobutyl, sec.-Butyl, Pentyl, Isopentyl, Neopentyl, tert.-Pentyl, Hexyl oder 2-Methylpentyl.

Reste R² sind weiterhin z.B. Formylamino, Acetylamino, Propionylamino oder Butyrylamino.

Reste L⁹ sind weiterhin z.B. Benzyl oder 1- oder 2-Phenylethyl.

Reste L², L⁹ und L¹¹ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste L² sind weiterhin z.B. Phenylthio, 2-Methylphenylthio, 2-Methoxyphenylthio oder 2-Chlorphenylthio.

Reste R¹, R² und L² sind, wie auch Reste X, weiterhin z.B. Methoxy, Ethoxy, Propoxy, Isopropoxy, Butoxy, Isobutoxy, sec.-Butoxy, Pentyloxy, Isopentyloxy, Neopentyloxy, tert.-Pentyloxy, Hexyloxy oder 2-Methylpentyloxy.

Reste L² und L¹³ sind, wie auch Reste L⁶, weiterhin z.B. Fluor, Chlor oder Brom.

Reste L¹ und L² sind weiterhin z.B. Methylsulfonyl, Ethylsulfonyl, Propylsulfonyl, Isopropylsulfonyl, Butylsulfonyl, Isobutylsulfonyl, sec.-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste L⁶ sind, wie auch Reste L³, weiterhin z.B. Methoxycarbonyl, Ethoxycarbonyl, Propoxycarbonyl, Isopropoxycarbonyl, Butoxycarbonyl, Isobutoxycarbonyl oder sec.-Butoxycarbonyl.

Reste R¹, R² und L² sind weiterhin z.B. 2-Methoxyethoxy, 2-Ethoxyethoxy, 2- oder 3-Methoxypropoxy, 2- oder 3-Ethoxypropoxy, 2-oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste X sind weiterhin z.B. Methylamino, Ethylamino, Propylamino, Isopropylamino oder Butylamino.

Reste L¹¹ und X sind weiterhin z.B. Dimethylamino, Diethylamino, Dipropylamino, Diisopropylamino oder N-Methyl-N-ethylamino.

Reste L¹² sind weiterhin z.B. 2-Methoxycarbonylethylthio oder 2-Ethoxycarbonylethylthio.

Reste R³ sind weiterhin z.B. Cyclopentyl, Cyclohexyl, Cycloheptyl, Allyl oder Methallyl.

Reste L⁹ sind weiterhin z.B. Phenyl, 2-, 3- oder 4-Methylphenyl, 2,4-Dimethylphenyl, 2-, 3- oder 4-Chlorphenyl, 2-, 3- oder 4-Methoxyphenyl, 2- oder 3-Methylthienyl oder 2-, 3- oder 4-Methylpyridyl.

Reste Y¹ und Y² sind z.B. (CH₂)₂, (CH₂)₃, (CH₂)₄, (CH₂)₅, (CH₂)₆, (CH₂)₇, (CH₂)₈, (CH₂)₉, (CH₂)₁₀, CH(CH₃)-CH₂, CH(CH₃)-CH(CH₃), C₂H₄-O-C₂H₄, C₂H₄-NH-C₂H₄, C₂H₄-N(CH₃)-C₂H₄, C₂H₄O-C₂H₄-O-C₂H₄, C₂H₄-NH-C₂H₄-NH-C₂H₄ oder C₂H₄-N(CH₃)-C₂H₄-N(CH₃)-C₂H₄.

Reste W sind z.B. Methylimino, Ethylimino, Propylimino, Isopropylimino oder Butylimino.

Reste L¹ und L⁶ sind weiterhin z.B. Formyl, Acetyl, Propionyl, Butyryl, Pentanoyl oder Hexanoyl.

Wenn L¹ für den Rest -CH=T steht, worin T sich von einer CH-aciden Verbindung H₂T ableitet, können als CH-acide Verbindungen H₂T z.B. Verbindungen der Formel 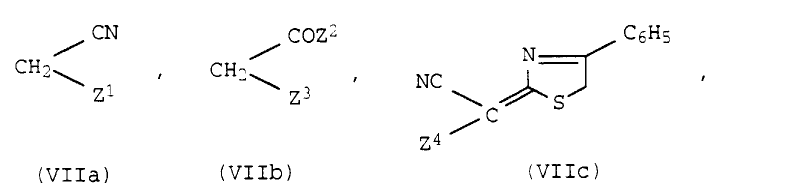 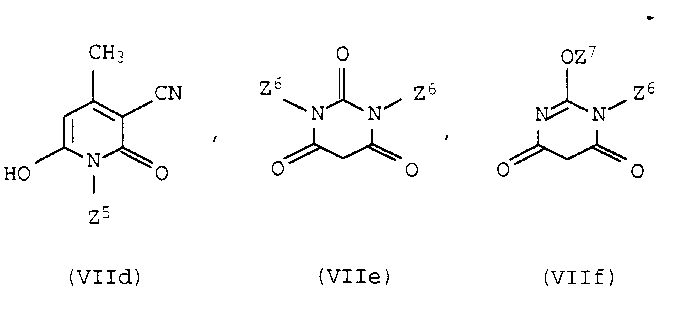 oder 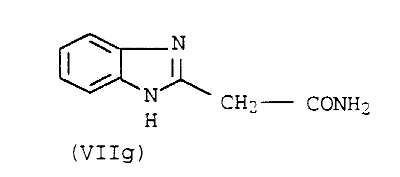 in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₄-Alkyl, C₁-C₄-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest der sich von Verbindungen der Formel VIIa, VIIb oder VIIc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest der sich von Verbindungen der Formel VIIa, VIIb oder VIIc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Bevorzugt sind Azofarbstoffe enthaltende Polymerisate, die als charakteristische Monomereinheiten Reste der Formel Ia 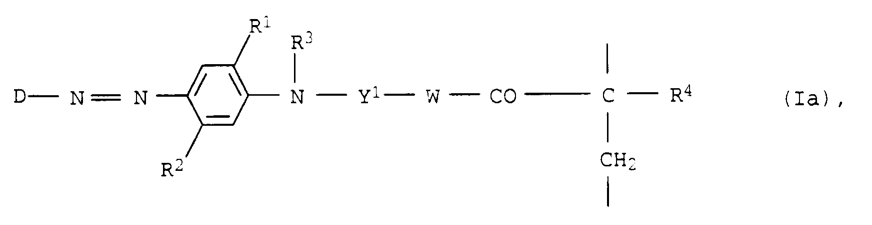 worin D, R¹, R², R³, R⁴, Y¹ und W jeweils die obengenannte Bedeutung besitzen, und der obengenannten Formel II aufweisen.

Bevorzugt sind weiterhin Azofarbstoffe enthaltende Polymerisate, in denen D in Formel I sich von einem Amin der Formel VIa, VIb, VIc, VIe, VIf, VIm oder VIn ableitet.

Bevorzugt sind weiterhin Azofarbstoffe enthaltende Polymerisate, in denen der Anteil der Monomereinheiten der Formel I 4 bis 50, insbesondere 8 bis 25 mol-%, der der Formel II 51 bis 96, insbesondere 75 bis 92 mol-%, der der Formel III 0 bis 30, insbesondere 0 bis 15 mol-% und der der Formel IV 0 bis 50, insbesondere 0 bis 20 mol-%, jeweils bezogen auf das Polymerisat, und das mittlere Molekulargewicht des Polymerisats 1500 bis 50000, insbesondere 2000 bis 25000 betragen.

Besonders zu nennen sind Azofarbstoffe enthaltende Polymerisate, in denen in Formel I
- R¹: Wasserstoff oder C₁-C₄-Alkoxy,
- R²: C₁-C₄-Alkyl, C₁-C₄-Alkoxy oder Acetylamino,
- R³: C₁-C₄-Alkyl,
- R⁴: Wasserstoff oder Methyl und
- Y¹: C₂-C₈-Alkylen und
in Formel II
- R⁴: Wasserstoff oder Methyl und
- X: C₁-C₄-Alkoxy bedeuten.

Besonders bevorzugt sind Azofarbstoffe enthaltende Polymerisate, in denen D sich von Aminen aus der Thiophenreihe, dabei insbesondere von solchen der Formel VIb ableitet.

Insbesondere zu nennen sind Azofarbstoffe enthaltende Polymerisate, in denen D sich von einem Amin der Formel VIb ableitet, worin
- L¹: Nitro, Cyano, C₁-C₄-Alkanoyl oder einen Rest der Formel -CH=T, worin T die obengenannte Bedeutung besitzt,
- L²: Wasserstoff, C₁-C₄-Alkyl oder Halogen,
- L³: Cyano, C₁-C₄-Alkoxycarbonyl oder Nitro bedeuten.

Zur Herstellung der erfindungsgemäßen Polymerisate sind in vorteilhafter Weise Azofarbstoffe der Formel V 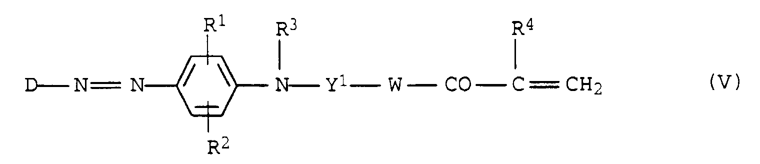 geeignet, in der D, R¹, R², R³, R⁴, Y¹ und W jeweils die obengenannte Bedeutung besitzen.

Die Herstellung der neuen Polymerisate kann nach an sich bekannten Methoden, wie sie z.B. in J. Polymer Sci. (loc. cit.) beschrieben sind, erfolgen.

Zweckmäßig setzt man dabei einen Azofarbstoff der Formel V mit einer Acrylverbindung der Formel VIII 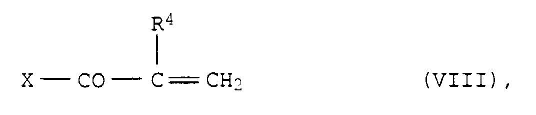 in der R⁴ und X jeweils die obengenannte Bedeutung besitzen, Styrol und einem Zimtsäureester der Formel IX 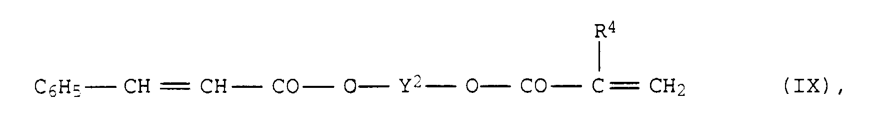 in der Y² und R⁴ jeweils die obengenannte Bedeutung besitzen, im obengenannten Molverhältnis in einem inerten Lösungsmittel (z.B. Toluol oder Xylol) in Gegenwart eines Radikalstarters (z.B. Azo-bis-isobutyronitril) um.

Die Azofarbstoffe der Formel V sind an sich bekannt und z.B. in der EP-A-201 896, DE-A-3 108 077, US-A-4 843 153 oder GB-A-1 546 803 beschrieben oder können nach den dort genannten Methoden erhalten werden.

Die erfindungsgemäßen Azofarbstoffe enthaltenden Polymerisate eignen sich in vorteilhafter Weise zur Anwendung in nichtlinear optischen Systemen (siehe z.B. Chemistry and Industry, 1. Okt. 1990, Seiten 600 bis 608).

Es wurde nun gefunden, daß Azofarbstoffe enthaltende Polymerisate, die als charakteristische Monomereinheiten Reste der Formel X 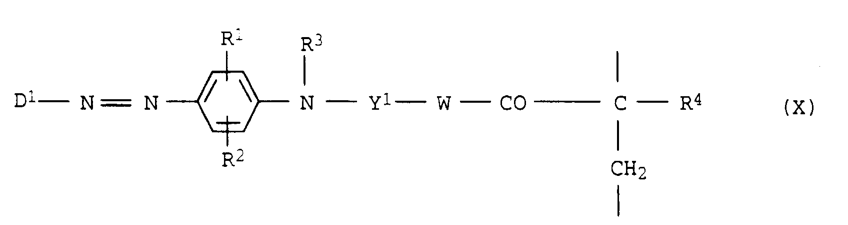 sowie die oben beschriebenen Reste der Formeln II, III und IV aufweisen, worin
- D¹: sich von einem heterocyclischen Amin aus der Pyrrol-, Furan-, Thiophen-, Pyrazol-, Imidazol-, Oxazol-, Isoxazol-, Thiazol, Isothiazol-, Triazol-, Oxdiazol-, Thiadiazol-, Benzofuran-, Benzthiophen-, Benzimidazol-, Benzoxazol-, Benzisothiazol-, Pyridothiophen-, Pyrimidothiophen- oder Thienothiophenreihe ableitet,
und R¹, R², R³, R⁴, Y¹ und W jeweils die obengenannte Bedeutung besitzen, im obengenannten Molverhältnis der Monomereinheiten und einem mittleren Molekulargewicht von 1000 bis 100000, sich zur Verwendung in der nichtlinearen Optik eignen.

Hervorzuheben als Reste D¹ sind die bereits obengenannten Reste D sowie der Thiazolrest der Formel VId 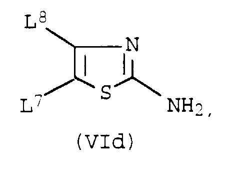 worin
- L⁷: Nitro, Cyano, C₁-C₆-Alkanoyl, Benzoyl, C₁-C₆-Alkylsulfonyl, gegebenenfalls substituiertes Phenylsulfonyl oder einen Rest der Formel -CH=T, worin T die obengenannte Bedeutung besitzt,
- L⁸: Wasserstoff, C₁-C₆-Alkyl, Halogen, gegebenenfalls durch Phenyl oder C₁-C₄-Alkoxy, substituiertes C₁-C₆-Alkoxy, gegebenenfalls durch Phenyl substituiertes C₁-C₆-Alkylthio, gegebenenfalls substituiertes Phenylthio, C₁-C₆-Alkylsulfonyl, gegebenenfalls substituiertes Phenylsulfonyl oder C₁-C₄-Alkoxycarbonyl bedeuten.

Die Reste L⁸ stimmen mit den zu L² im einzelnen genannten Resten überein.

Reste L⁸ sind weiterhin z.B. Methoxycarbonyl, Ethoxycarbonyl, Propoxycarbonyl, Isopropoxycarbonyl, Butoxycarbonyl, Isobutoxycarbonyl oder sec.-Butoxycarbonyl.

Die Reste L⁷ stimmen mit den zu L¹ im einzelnen genannten Resten überein.

Zur Verwendung in der nichtlinearen Optik werden Azofarbstoffe enthaltende Polymerisate bevorzugt, die als charakteristische Monomereinheiten Reste der Formel Xa 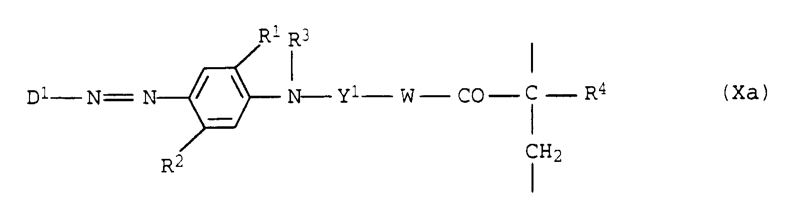 worin D¹, R¹, R², R³, R⁴, Y¹ und W jeweils die obengenannte Bedeutung besitzen, und der obengenannten Formel II aufweisen.

Die zur Verwendung in der nichtlinearen Optik besonders bevorzugten Azofarbstoffe enthaltende Polymerisate sind die bereits oben als bevorzugt genannten sowie die, in denen sich D von Aminen der Thiazolreihe ableitet, wobei den Aminen der Thiazolreihe die gleiche Bedeutung wie den Aminen der Thiophenreihe zukommt.

Insbesondere ist hierbei die Eignung der Polymeren in der Nachrichtentechnik, in elektrooptischen Modulatoren (z.B. Mach-Zehnder-Interferometer), in optischen Schaltern, bei der Frequenzmischung oder in Wellenleitern hervorzuheben.

Die Herstellung von Schichten, die die erfindungsgemäßen Polymerisate enthalten, erfolgt dabei in an sich bekannter Weise, z.B. durch Naßbeschichtung (Spincoating) mit einer 5 bis 15 gew.-%igen Lösung des Polymerisats in einem Lösungsmittel (z.B. Tetrachlorethan, Methylenchlorid oder Tetrahydrofuran).

Bei geeignetem Substitutionsmuster (z.B. Epoxystruktur) können die neuen Polymerisate auch photochemisch, thermisch oder durch Einwirkung von Elektronenstrahlen vernetzt werden.

Die neuen Polymerisate zeichnen sich durch gute Verarbeitbarkeit zu dünnen Schichten, hohe Reinheit, enge Molekulargewichtsverteilung, gute Orientierung im elektrischen Feld, gute Langzeitstabilität, hohe Glasstufen sowie einen hohen elektrooptischen Koeffizienten aus.

Die folgenden Beispiele sollen die Erfindung näher erläutern.

### I. Herstellung der monomeren Azofarbstoffe

### Farbstoff 1

a) Herstellung der Kupplungskomponente
421 g (3,05 mol) Kaliumcarbonat wurden mit 40 g (0,12 mol) Kaliumiodid in 240 ml Wasser aufgerührt. Unter ständigem Rühren wurden 169 g (1,2 mol) N-Ethyl-m-toluidin in 240 ml Isobutanol und anschließend 260 g (1,8 mol) 6-Chlorhexanol zugesetzt. Dann wurde zum Sieden erhitzt. Nach 12 Stunden Erhitzen unter Rückfluß wurde das Reaktionsgemisch auf Raumtemperatur abgekühlt, mit 400 ml Wasser versetzt und die wäßrige Phase abgetrennt. Nach weiterem dreimaligem Waschen der organischen Phase mit je 400 ml Wasser wurde über Natriumsulfat getrocknet und das Lösungsmittel unter vermindertem Druck entfernt. Das zurückbleibende Öl wurde fraktioniert destilliert (157-158°C bei 1,0 mbar). Ausbeute: 231 g (82 %).
47 g (0,2 mol) N-Ethyl-N-(6-hydroxyhexyl)-m-toluidin wurden in 600 ml Dichlormethan gelöst. Dazu gab man 42 ml Triethylamin und 2,4 g Hydrochinon. Nach Abkühlen der Reaktionslösung auf 0 bis 5°C wurden langsam 38 ml (0,4 mol) Methacryloylchlorid in 100 ml Dichlormethan zugetropft. Es wurde 2 Stunden bei dieser Temperatur gerührt, anschließend auf Raumtemperatur erwärmt und 50 Stunden nachgerührt. Die Aufarbeitung erfolgte durch Waschen der organischen Phase mit 300 ml gesättigter Natriumhydrogencarbonatlösung und anschließend zweimal mit je 300 ml Kochsalzlösung. Nach Trocknen über Natriumsulfat und Einengen des Lösungsmittels wurde das Rohprodukt säulenchromatographisch an Kieselgel mit Toluol/Methanol (95:5 v/v) als Eluens gereinigt. Ausbeute: 44 a (71 %) des Anilins der Formel 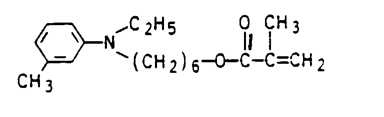
b) Herstellung des Azofarbstoffes
6,4 g (0,035 Mol) 2-Amino-4-chlor-3,5-dicyanothiophen wurden in 100 ml Eisessig/Propionsäure (17:3 v/v) aufgerührt. Anschließend wurden 14 ml 85 gew.-%ige Schwefelsäure bei Raumtemperatur und 6 ml Nitrosylschwefelsäure bei 0 bis 5°C zugetropft. Nach dreistündigem Rühren bei 0 bis 5°C wurde die entstandene Diazoniumsalzlösung zu 10,9 g (0,036 Mol) der unter a) beschriebenen Kupplungskomponente in 300 g Eiswasser, 20 ml konz. Salzsäure und 1 g Amidosulfonsäure bei einer Temperatur < 5°C und einem pH-Wert von 1 bis 1,5 getropft. Der pH-Wert wurde durch Zutropfen von 20 gew.-%iger Natronlauge bei 1 bis 1,5 gehalten. Nach Rühren über Nacht bei Raumtemperatur wurde der ausgefallene Farbstoff abgesaugt, mit Wasser gewaschen, getrocknet und zweimal an Kieselgel mit Hexan/Aceton (95:5 v/v) als Eluens chromatographiert.
Ausbeute: 10 g (57 %) des Farbstoffs der Formel

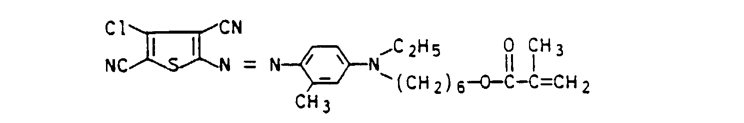

| | | | | | |
|---|---|---|---|---|---|
| C₂₅H₂₈N₅SO₂Cl (498,0) | | | | | |
| ber.: | C 60,29 | H 5,67 | N 14,06 | S 6,43 | O 6,43 |
| gef.: | C 60,31 | H 5,75 | N 13,99 | S 6,40 | O 6,43 |

In analoger Weise werden die in der folgenden Tabelle 1 aufgeführten Farbstoffe der Formel 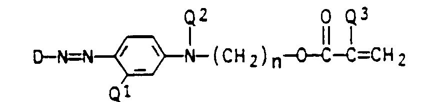 erhalten.

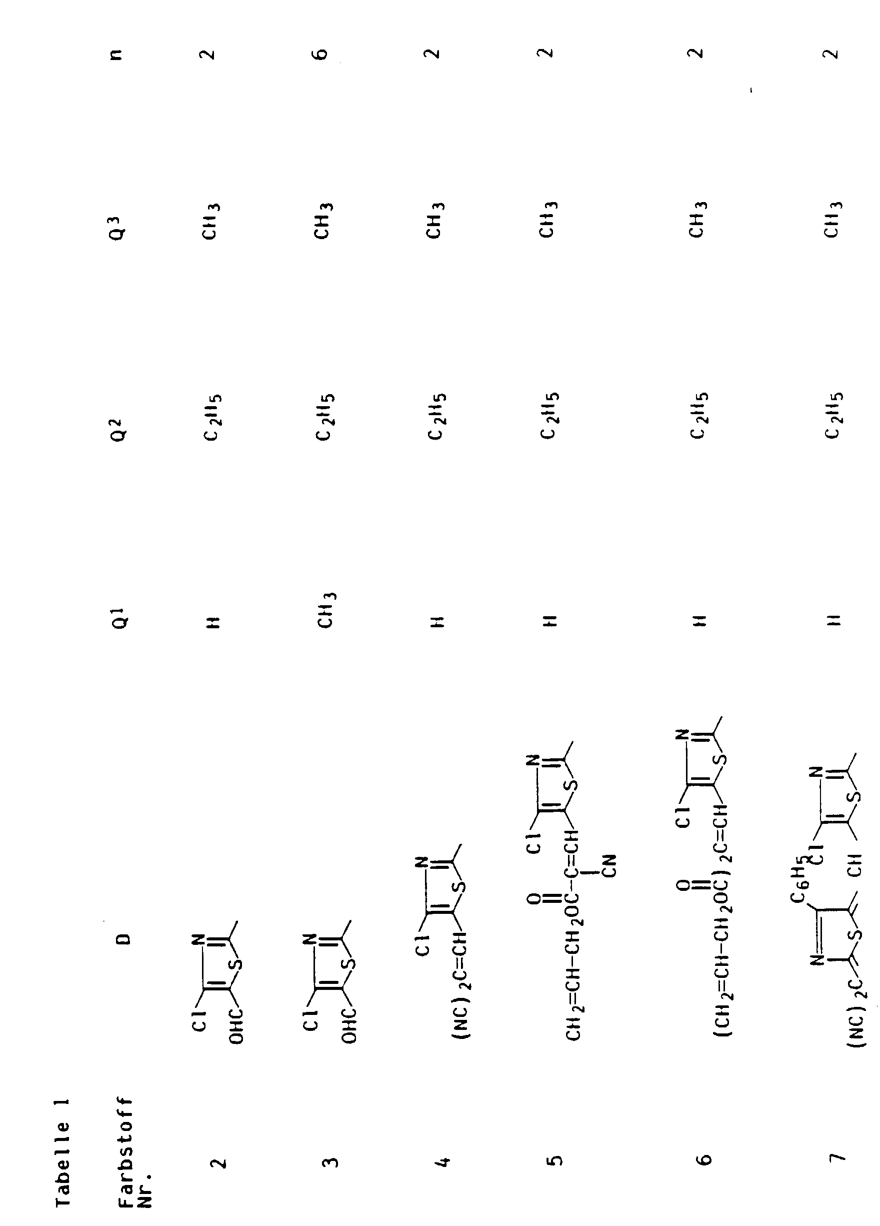

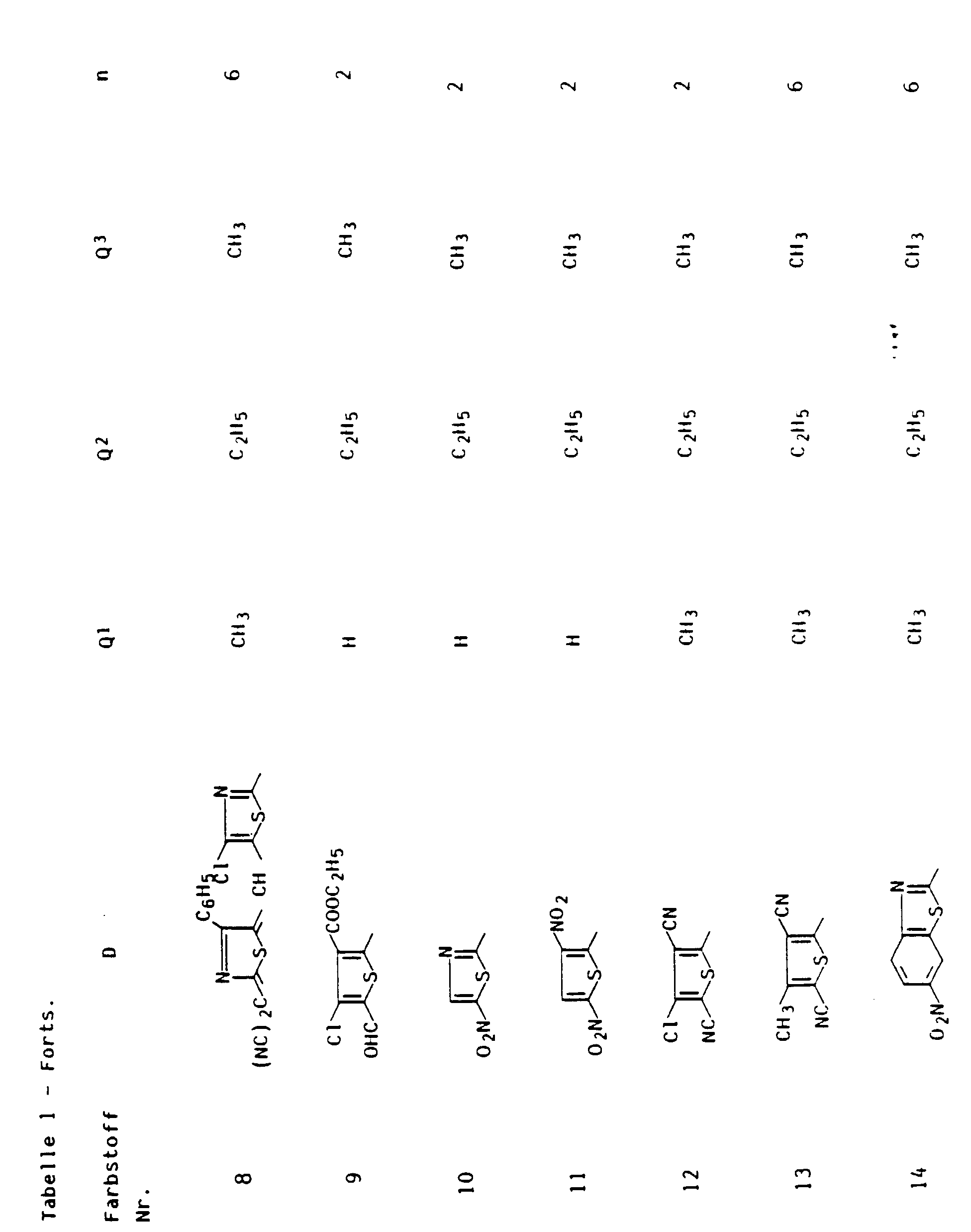

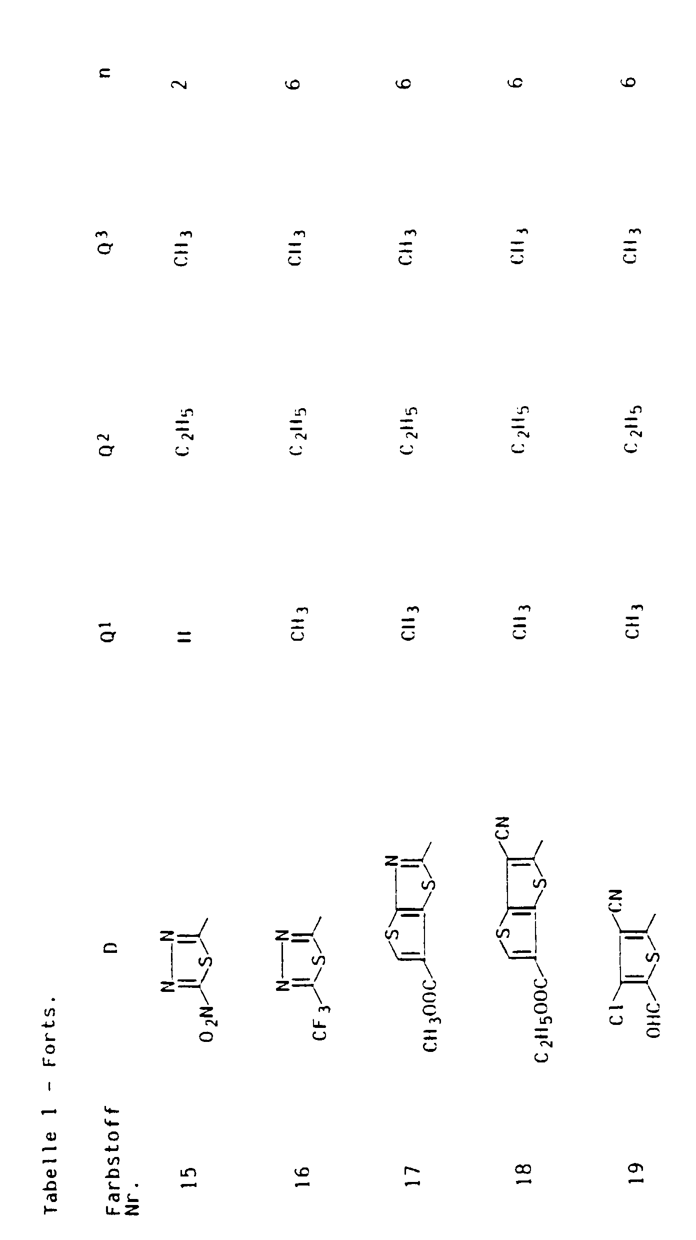

### II) Herstellung des Polymerisats

Allgemeine Polymerisationsvorschrift für die Herstellung von Polyacrylaten folgender Formel: 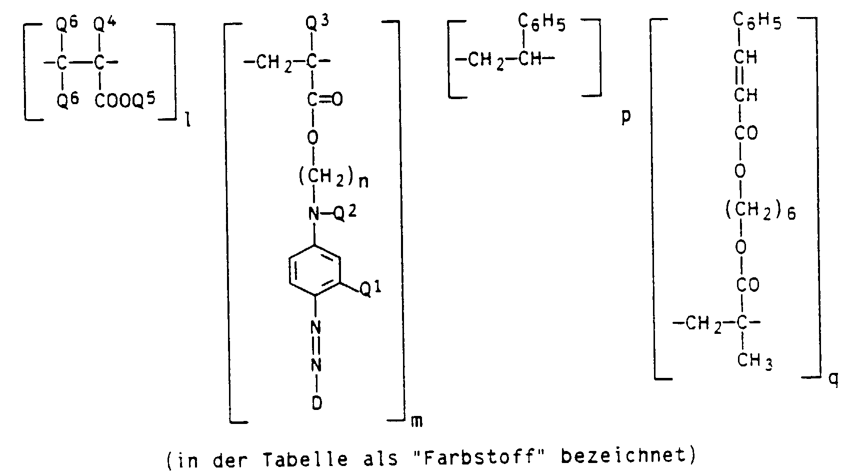 (Bei den Indices 1, m, p und q handelt es sich um die Molprozente der jeweiligen Monomereinheiten, bezogen auf das Polymerisat.)

In einem Schlenkgefäß wurde eine Monomerlösung, bestehend aus m Mol-% Farbstoffmonomer und l+p+q Mol-% Comonomer in absolutem Toluol mit 2 Mol.-% Azo-bis-isobutyronitril versetzt. Nach 10-minütigem Hindurchleiten von Argon wurde das Monomergemisch bei 50°C thermostabilisiert. Nach 100 Stunden war die Polymerisationsreaktion beendet. Die Polymere wurden mit Methanol ausgefällt und zweimal aus Hexan/Methanol umgefällt. (Falls noch Monomeranteile vorhanden sind, können diese säulenchromatographisch an Kieselgel z.B. mit Toluol/Essigester (9:1 v/v) als Eluens abgetrennt werden.) Nach Entfernen des Lösungsmittels wurde das Polymere im Hochvakuum getrocknet. Die quantitative Zusammensetzung der Copolymeren erfolgte mittels UV-Spektroskopie und Elementaranalyse. Die Molekulargewichtsbestimmung erfolgte durch Gelpermeationschromatographie. Die Bestimmung der Glasstufe des Polymeren erfolgte differentialkalorimetrisch.

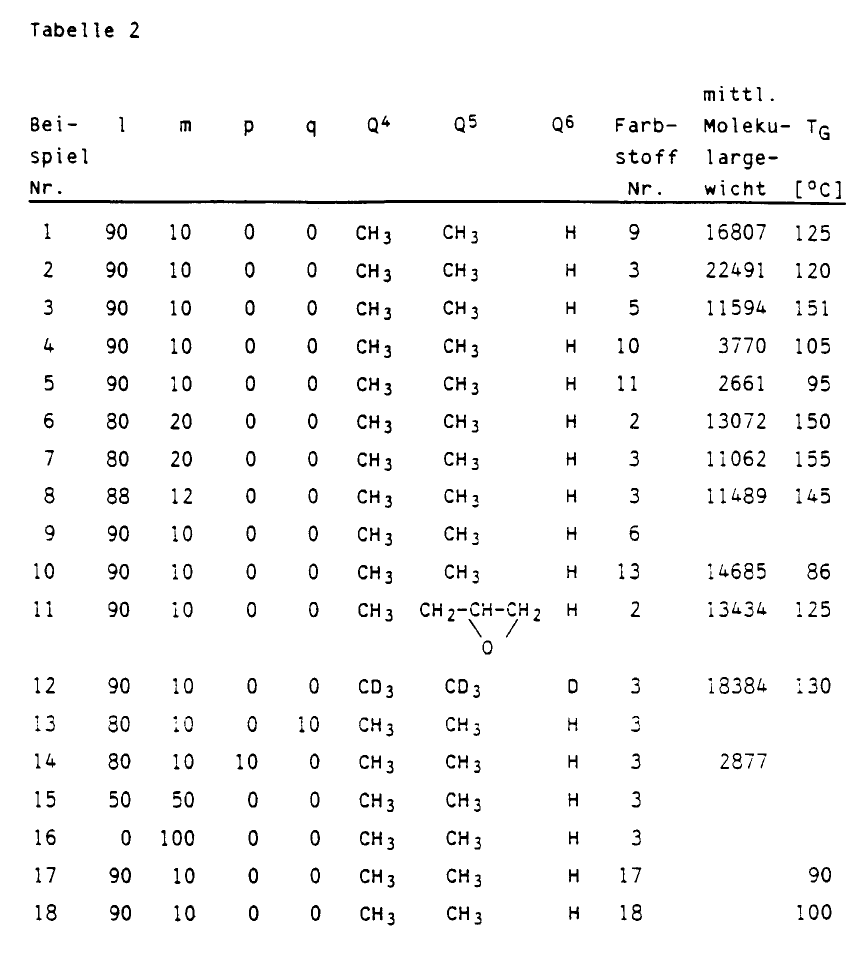

## Patentansprüche

1. Azofarbstoffe enthaltende Polymerisate, die als charakteristische Monomereinheiten Reste der Formeln I, II, III und IV 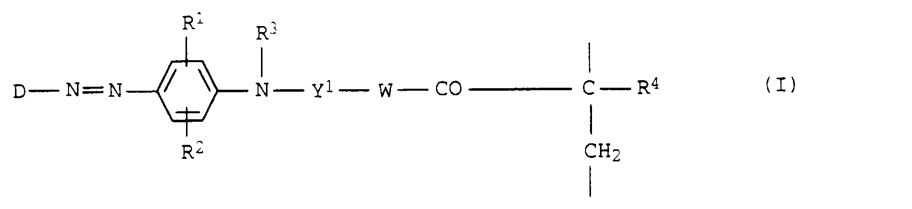 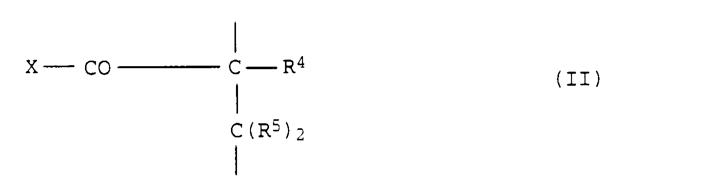 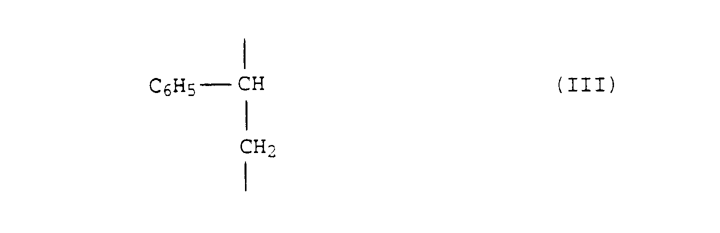 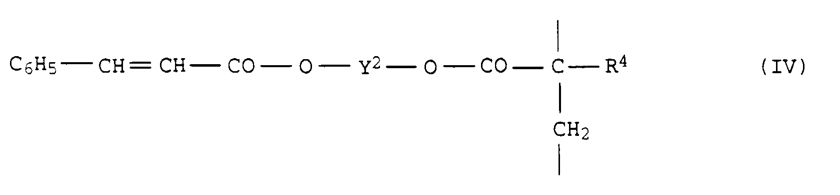 aufweisen, worin
D sich von einem heterocyclischen Amin aus der Pyrrol-, Furan-, Thiophen-, Pyrazol-, Imidazol-, Oxazol-, Isoxazol-, Isothiazol-, Triazol-, Oxdiazol-, Thiadiazol-, Benzofuran-, Benzthiophen-, Benzimidazol-, Benzoxazol-, Benzisothiazol-, Pyridothiophen-, Pyrimidothiophen- oder Thienothiophenreihe ableitet,
R¹ und R² unabhängig voneinander jeweils Wasserstoff, C₁-C₆-Alkyl oder C₁-C₆-Alkoxy, das gegebenenfalls durch Phenyl oder C₁-C₄-Alkoxy substituiert ist, oder R² auch C₁-C₄-Alkanoylamino,
R³ Wasserstoff, C₁-C₆-Alkyl, C₅-C₇-Cycloalkyl oder C₁-C₄-Alkenyl,
R⁴ Wasserstoff, Deuterium, Methyl, trideuteriertes Methyl oder Chlor,
R⁵ Wasserstoff oder Deuterium,
Y¹ und Y² unabhängig voneinander jeweils C₂-C₁₀-Alkylen, das gegebenenfalls durch 1 bis 3 Sauerstoffatome in Etherfunktion oder Imino- oder C₁-C₄-Alkyliminogruppen unterbrochen ist,
W Sauerstoff, Imino oder C₁-C₄-Alkylimino und
X Hydroxy, C₁-C₆-Alkoxy, trideuteriertes Methoxy, 2,3-Epoxypropoxy, Phenoxy, Amino oder C₁-C₄-Mono-oder Dialkylamino bedeuten,
wobei der Anteil der Monomereinheiten der Formel I 1 bis 100 mol-%, der der Formel II 0 bis 99 mol-%, der der Formel III 0 bis 99 mol-% und der der Formel IV 0 bis 75 mol-%, jeweils bezogen auf das Polymerisat, und das mittlere Molekulargewicht des Polymerisats 1000 bis 100000 betragen.

2. Verwendung von Azofarbstoffen der Formel V 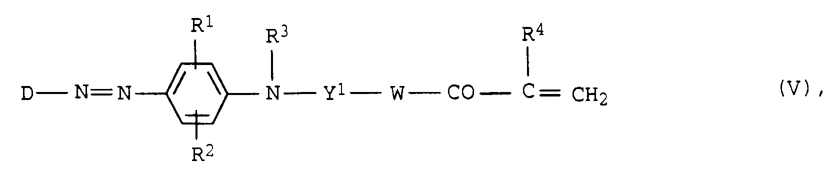 in der D, R¹, R², R³, R⁴, Y¹ und W jeweils die in Anspruch 1 genannte Bedeutung besitzen, zur Herstellung von Azofarbstoffe enthaltenden Polymerisaten gemäß Anspruch 1.

3. Verwendung von Azofarbstoffe enthaltenden Polymerisaten, die als charakteristische Monomereinheiten Reste der Formeln X, II, III und IV 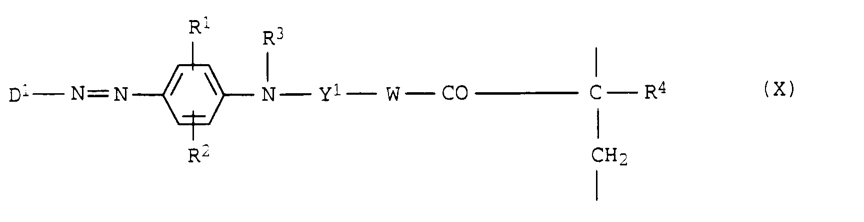 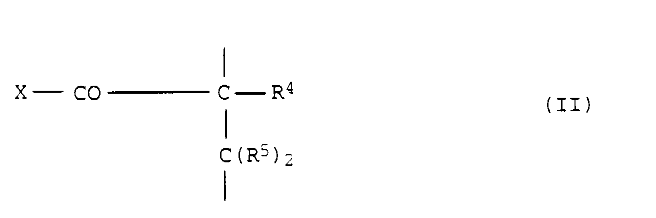 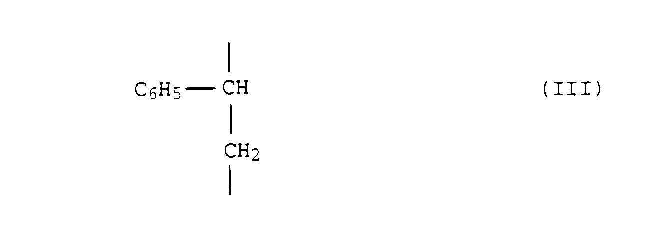 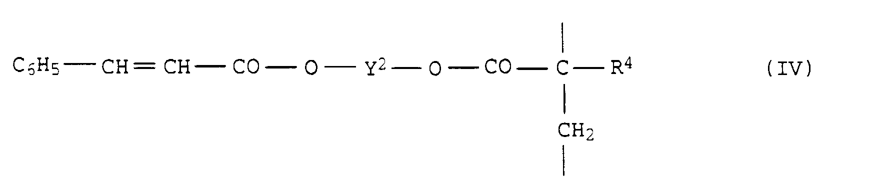 aufweisen, worin
D¹ sich von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxdiazol-, Thiadiazol-, Benzofuran-, Benzthiophen-, Benzimidazol-, Benzoxazol-, Benzisothiazol-, Pyridothiophen-, Pyrimidothiophen- oder Thienothiophenreihe ableitet,
R¹ und R² unabhängig voneinander jeweils Wasserstoff, C₁-C₆-Alkyl oder C₁-C₆-Alkoxy, das gegebenenfalls durch Phenyl oder C₁-C₄-Alkoxy substituiert ist, oder R² auch C₁-C₄-Alkanoylamino,
R³ Wasserstoff, C₁-C₆-Alkyl, C₅-C₇-Cycloalkyl oder C₃-C₄-Alkenyl,
R⁴ Wasserstoff, Deuterium, Methyl, trideuteriertes Methyl oder Chlor,
R⁵ Wasserstoff oder Deuterium,
Y¹ und Y² unabhängig voneinander jeweils C₂-C₁₀-Alkylen, das gegebenenfalls durch 1 bis 3 Sauerstoffatome in Etherfunktion oder Imino- oder C₁-C₄-Alkyliminogruppen unterbrochen ist,
W Sauerstoff, Imino oder C₁-C₄-Alkylimino und
X Hydroxy, C₁-C₆-Alkoxy, trideuteriertes Methoxy, 2,3-Epoxypropoxy, Phenoxy, Amino oder C₁-C₄-Mono-oder Dialkylamino bedeuten,
wobei der Anteil der Monomereinheiten der Formel I 1 bis 100 mol-%, der der Formel II 0 bis 99 mol-%, der der Formel III 0 bis 99 mol-% und der der Formel IV 0 bis 75 mol-%, jeweils bezogen auf das Polymerisat, und das mittlere Molekulargewicht des Polymerisats 1000 bis 100000 betragen, in der nichtlinearen Optik.

## Revendications

1. Polymères contenant des colorants azoïques qui comportent, comme motifs monomères caractéristiques, des restes de formules I, II, III et IV 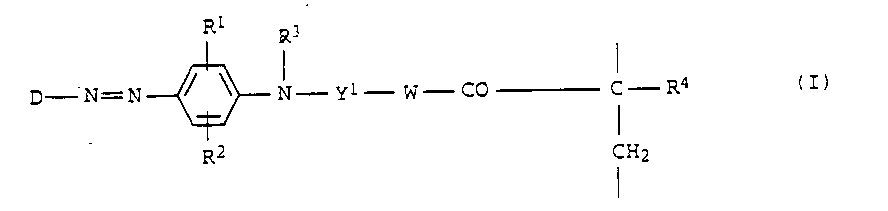 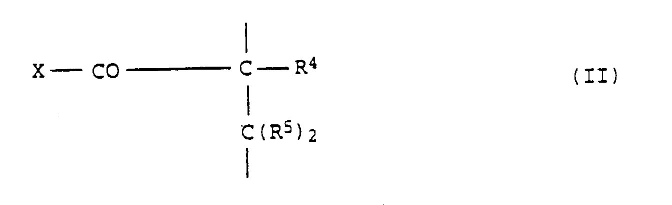 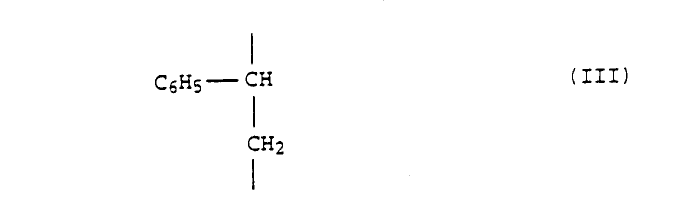 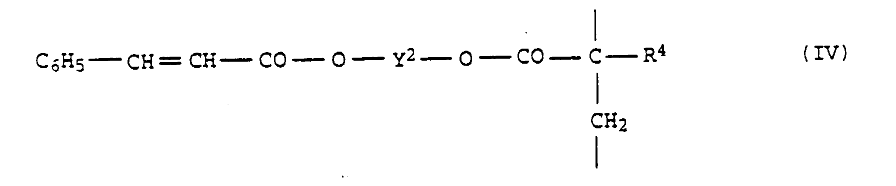 dans lesquelles
D dérive d'une amine hétérocyclique de la série du pyrrole, du furanne, du thiophène, du pyrazole, de l'imidazole, de l'oxazole, de l'isoxazole, de l'isothiazole, du triazole, de 1' oxdiazole, du thiadiazole, du benzofuranne, du benzothiophène, du benzimidazole, du benzoxazole, du benzisothiazole, du pyridothiophène, du pyrimidothiophène ou du thiénothiophène,
R¹ et R² représentent chacun, indépendamment l'un de l'autre, un atome d'hydrogène ou un reste alkyle en C₁-C₆ ou alcoxy en C₁-C₆ qui est éventuellement substitué par un groupement phényle ou alcoxy en C₁-C₄, R² pouvant aussi représenter un reste alcanoylamino en C₁-C₄,
R³ représente un atome d'hydrogène ou un reste alkyle en C₁-C₆, cycloalkyle en C₅-C₇ ou alcényle en C₃-C₄,
R⁴ représente un atome d'hydrogène, de deutérium, un reste méthyle, méthyle trideutéré ou un atome de chlore,
R⁵ représente un atome d'hydrogène ou de deutérium,
Y¹ et Y² représentent chacun, indépendamment l'un de l'autre, un reste alkylène en C₂-C₁₀ qui est éventuellement interrompu par 1 à 3 atomes d'oxygène en fonction éther ou groupements imino ou alkylimino en C₁-C₄,
W représente un atome d'oxygène ou un groupement imino ou alkylimino en C₁-C₄ et
X représente un reste hydroxy, alcoxy en C₁-C₆, méthoxy trideutéré, 2,3-époxypropoxy, phénoxy, amino ou mono- ou dialkylamino en C₁-C₄,
la proportion des motifs monomères de formule I étant de 1 à 100% en moles, celle des motifs de formule II étant de 0 à 99% en moles, celle des motifs de formule III étant de 0 à 99% en moles et celle des motifs de formule IV étant de 0 à 75% en moles, chaque fois par rapport au polymère, et le poids moléculaire moyen du polymère étant de 1000 à 100 000.

2. Utilisation de colorants azoïques de formule V 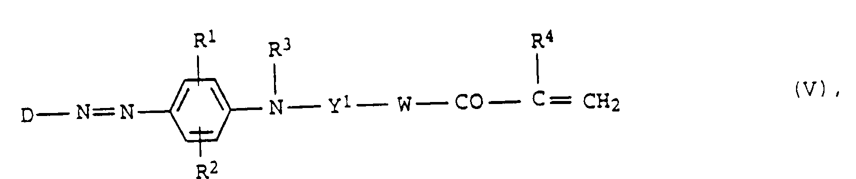 dans laquelle D, R¹, R², R³, R⁴, Y¹ et W ont chacun la signification donnée dans la revendication 1, pour la préparation de polymères contenant des colorants azoïques selon la revendication 1.

3. Utilisation, en optique non linéaire, de polymères contenant des colorants azoïques qui comportent, comme motifs monomères caractéristiques, des restes de formules X, II, III et IV 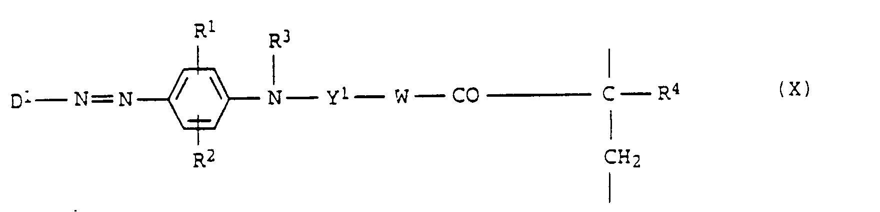 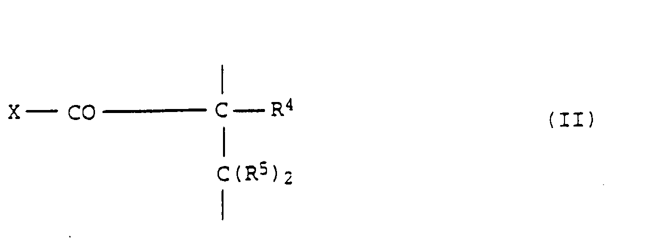 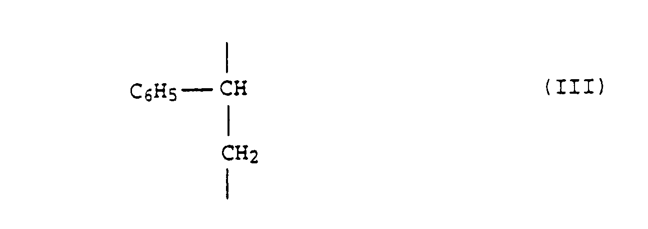 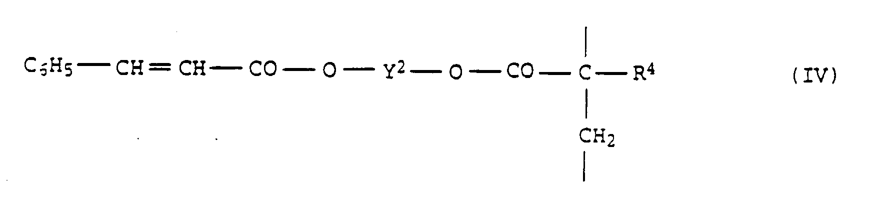 dans lesquelles
D¹ dérive d'une amine hétérocyclique de la série du pyrrole, du furanne, du thiophène, du pyrazole, de l'imidazole, de l'oxazole, de l'isoxazole, du thiazole, de l'isotbiazole, du triazole, de l'oxdiazole, du thiadiazole, du benzofuranne, du benzotbiopbène, du benzimidazole, du benzoxazole, du benzisothiazole, du pyridothiophène, du pyrimidothiophène ou du thiénothiophène,
R¹ et R² représentent chacun, indépendamment l'un de l'autre, un atome d'hydrogène ou un reste alkyle en C₁-C₆ ou alcoxy en C₁-C₆ qui est éventuellement substitué par un groupement phényle ou alcoxy en C₁-C₄, R² pouvant aussi représenter un reste alcanoylamino en C₁-C₄,
R³ représente un atome d'hydrogène ou un reste alkyle en C₁-C₆, cycloalkyle en C₅-C₇ ou alcényle en C₃-C₄,
R⁴ représente un atome d'hydrogène, de deutérium, un reste méthyle, méthyle trideutéré ou un atome de chlore,
R⁵ représente un atome d'hydrogène ou de deutérium,
Y¹ et Y² représentent chacun, indépendamment l'un de l'autre, un reste alkylène en C₂-C₁₀ qui est éventuellement interrompu par 1 à 3 atomes d'oxygène en fonction éther ou groupements imino ou alkylimino en C₁-C₄,
W représente un atome d'oxygène ou un groupement imino ou alkylimino en C₁-C₄ et
X représente un reste hydroxy, alcoxy en C₁-C₆, méthoxy trideutéré, 2,3-époxypropoxy, phénoxy, amino ou mono- ou dialkylamino en C₁-C₄,
la proportion des motifs monomères de formule X étant de 1 à 100% en moles, celle des motifs de formule II étant de 0 à 99% en moles, celle des motifs de formule III étant de 0 à 99% en moles et celle des motifs de formule IV étant de 0 à 75% en moles, chaque fois par rapport au polymère, et le poids moléculaire moyen du polymère étant de 1000 à 100 000.

## Claims

1. An azo dye polymer containing as characteristic monomer units radicals of the formulae I, II, III and IV 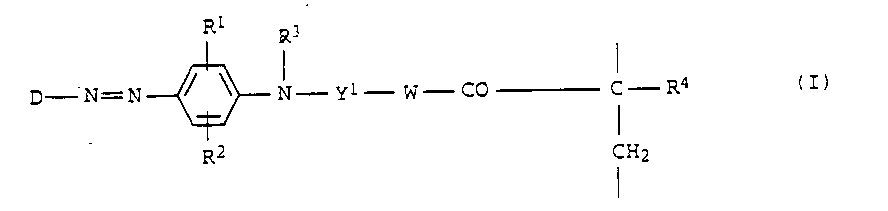 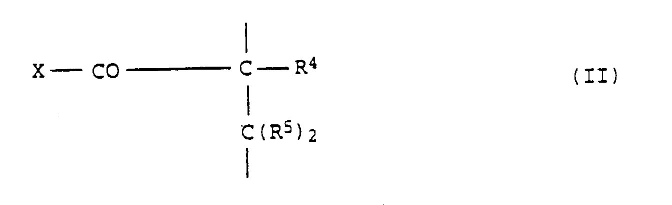 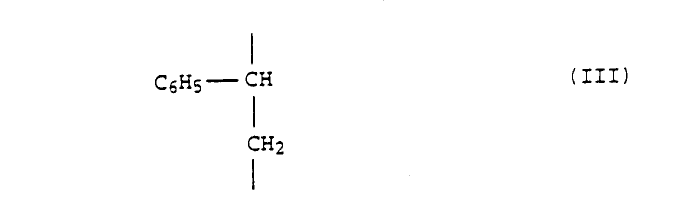 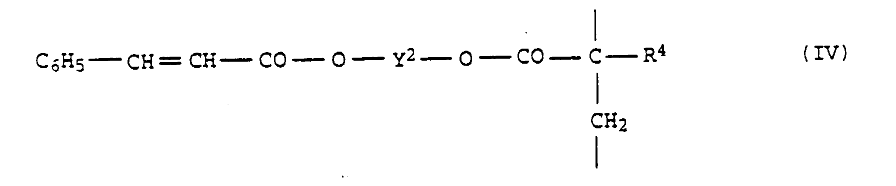 where
D is derived from a heterocyclic amine of the pyrrole, furan, thiophene, pyrazole, imidazole, oxazole, isoxazole, isothiazole, triazole, oxadiazole, thiadiazole, benzofuran, benzothiophene, benzimidazole, benzoxazole, benzisothiazole, pyridothiophene, pyrimidothiophene or thienothiophene series,
R¹ and R² are each independently of the other hydrogen, C₁-C₆-alkyl or C₁-C₆-alkoxy optionallysubstituted by phenyl or C₁-C₄-alkoxy, and R² may also be C₁-C₄-alkanoylamino,
R³ is hydrogen, C₁-C₆-alkyl, C₅-C₇-cycloalkyl or C₃-C₄-alkenyl,
R⁴ is hydrogen, deuterium, methyl, trideuterated methyl or chlorine,
R⁵ is hydrogen or deuterium,
Y¹ and Y² are each independently of the other C₂-C₁₀-alkylene optionally interrupted by 1 to 3 oxygen atoms in the ether function or imino or C₁-C₄-alkylimino groups,
W is oxygen, imino or C₁-C₄-alkylimino, and
X is hydroxyl, C₁-C₆-alkoxy, trideuterated methoxy, 2,3-epoxypropoxy, phenoxy, amino or C₁-C₄-mono- or -dialkylamino,
the proportion of monomer units of the formula I being from 1 to 100 mol %, the proportion of monomer units of the formula II being from 0 to 99 mol %, the proportion of monomer units of the formula III being from 0 to 99 mol % and the proportion of monomer units of the formula IV being from 0 to 75 mol %, each percentage being based on the polymer, and the average molecular weight of the polymer being from 1,000 to 100,000.

2. The use of azo dyes of the formula V 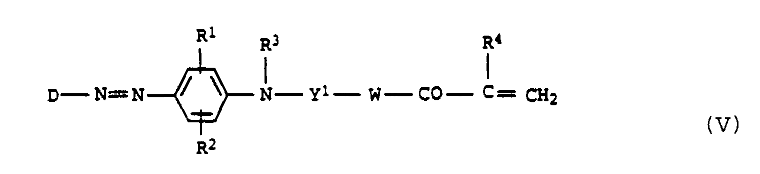 where D, R¹, R², R³, R⁴, Y¹ and W are each as defined in claim 1, for preparing azo dye polymers as claimed in claim 1.

3. The use in nonlinear optics of an azo dye polymer containing as characteristic monomer units radicals of the formulae X, II, III and IV 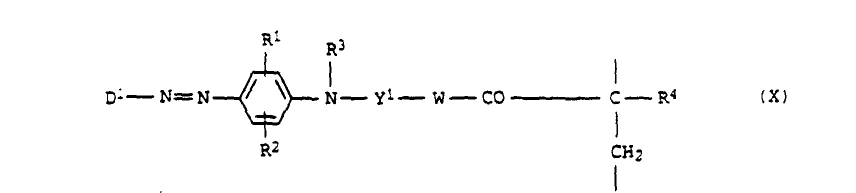 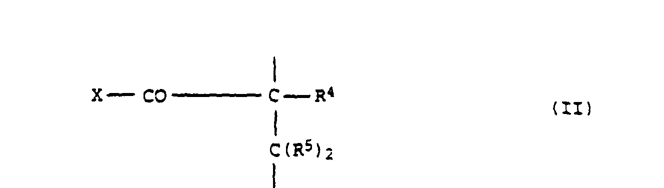 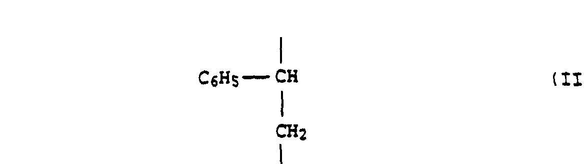 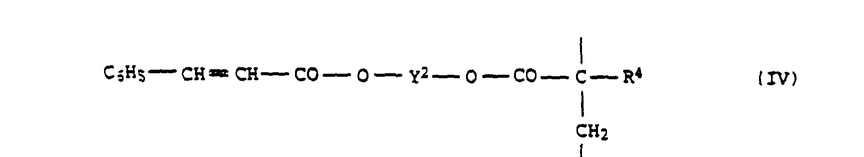 where
D¹ is derived from a heterocyclic amine or the pyrrole, furan, thiophene, pyrazole, imidazole, oxazole, isoxazole, thiazole, isothiazole, triazole, oxadiazole, thiadiazole, benzofuran, benzothiophene, benzimidazole, benzoxazole, benzisothiazole, pyridothiophene, pyrimidothiophene or thienothiophene series,
R¹ and R² are each independently of the other hydrogen, C₁-C₆-alkyl or C₁-C₆-alkoxy optionallysubstituted by phenyl or C₁-C₄-alkoxy, and R² may also be C₁-C₄-alkanoylamino,
R³ is hydrogen, C₁-C₆-alkyl, C₅-C₇-cycloalkyl or C₃-C₄-alkenyl,
R⁴ is hydrogen, deuterium, methyl, trideuterated methyl or chlorine,
R⁵ is hydrogen or deuterium,
Y¹ and Y² are each independently of the other C₂-C₁₀-alkylene optionally interrupted by 1 to 3 oxygen atoms in the ether function or imino or C₁-C₄-alkylimino groups,
W is oxygen, imino or C₁-C₄-alkylimino, and
X is hydroxyl, C₁-C₆-alkoxy, trideuterated methoxy, 2,3-epoxypropoxy, phenoxy, amino or C₁-C₄-mono- or -dialkylamino,
the proportion of monomer units of the formula I being from 1 to 100 mol %, the proportion of monomer units of the formula II being from 0 to 99 mol %, the proportion of monomer units of the formula III being from 0 to 99 mol % and the proportion of monomer units of the formula IV being from 0 to 75 mol %, each percentage being based on the polymer, and the average molecular weight of the polymer being from 1,000 to 100,000.
